(19) Europäisches Patentamt
European Patent Office
Office européen des brevets

(11) Publication number: **0 072 159 A1**

(12) **EUROPEAN PATENT APPLICATION**

(21) Application number: **82304031.6**

(22) Date of filing: **30.07.82**

(51) Int. Cl.³: **C 08 F 12/28**, C 07 C 91/26

(30) Priority: **07.08.81 US 291142**

(43) Date of publication of application: **16.02.83 Bulletin 83/7**

(84) Designated Contracting States: **AT BE CH DE FR GB IT LI NL SE**

(71) Applicant: **Rohm and Haas Company, Independence Mall West, Philadelphia, Pennsylvania 19105 (US)**

(72) Inventor: **Winey, Donald Alfred, 358 Rettop Street, Warminster Pennsylvania 18974 (US)**

(74) Representative: **Angell, David Whilton et al, Rohm and Haas Company Patent Department Chesterfield House Barter Street, London WC1A 2TP (GB)**

(54) **Aromatic quaternary ammonium compounds, polymers thereof, polymerisable compositions containing them and methods of making the monomers and polymers.**

(57) Monomers of the general formula

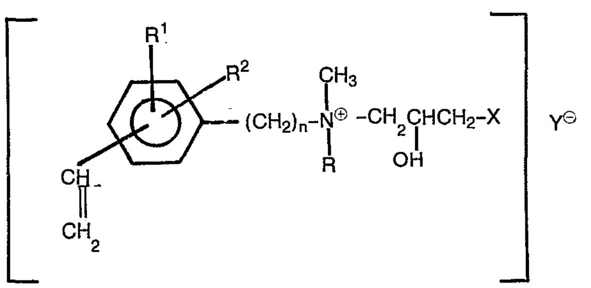

wherein X is halo,
n is an integer from 1 to 4,
$Y^{\ominus}$ is an anion,
R is $C_1$ to $C_4$ straight chain alkyl or hydroxy substituted $C_1$ to $C_4$ straight chain alkyl, and
$R^1$ and $R^2$ independently comprise one of: lower alkyl, iodo, bromo, chloro, lower alkoxy, amido, monohydrocarbylamido, dihydrocarbylamido, hydrocarbyloxy, carbonyloxy and hydrogen
are disclosed in addition to polymers thereof and copolymers containing units of them.

The monomers and polymers are stable at acid pH values, although capable of reacting with other reactants at the hydroxyl and/or halide group. On heating, they are self-reactive and can become crosslinked. At alkaline pH values they become self-reactive; the polymers crosslink slowly even at room temperature, with the crosslinking increasing rapidly on heating. The polymers are useful, inter alia, as wet-strength agents in the making of paper.

EP 0 072 159 A1

AROMATIC QUATERNARY AMMONIUM COMPOUNDS, POLYMERS THEREOF, POLYMERISABLE COMPOSITIONS CONTAINING THEM AND METHODS OF MAKING THE MONOMERS AND POLYMERS.

This invention relates to aromatic quaternary ammonium compounds, method of making same and the use thereof in polymerisable compositions and polymerisation process. The invention is concerned with novel monomers and processes for making and using same.

U.S. Patents 3,678,098 and 3,702,799 discuss in some detail the state of the art of reacting epihalohydrins with a number of different organic compounds to provide a great variety of products. These patents relate particularly to the production of unsaturated acid ester monomers, including acrylic or methacrylic acid, to produce useful quaternary ammonium monomers capable of reacting with monomers containing vinyl unsaturation by addition polymerization.

While these patents and the further prior art cited therein provide useful compounds they do not disclose useful addition-polymerizable quaternary ammonium monomers which also contain aromatic functional groups.

The present invention provides a group of phenylene-containing monomers of the quaternary ammonium type which can be usefully employed in the production of polymers having the desirable characteristics associated with phenylene groups without diminution of those characteristics associated with quaternary ammonium functionality. In this way, the usefulness of the monomers and polymers of this invention as compared with those disclosed in U.S. Patent Nos. 3,678,098 and 3,702,799 can be broadened to meet specific application requirements and/or to enhance desirable properties.

In accordance with the present invention, a hydrogen acid salt of an ar-vinylphenylenylalkylenyl dialkyl amine is reacted under suitable conditions with an epihalohydrin of the formula

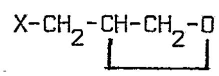

in which X is halo such as chlorine, bromine, or iodine or a group functionally similar to halides such as cyanide, to form halohydroxypropyl dialkylar-vinylphenylenylalkylenyl quaternary ammonium compounds, which may be represented as follows:

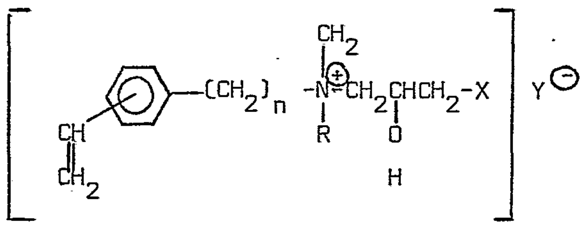

In the foregoing structure X is as defined above, n is an integer from 1 to 4,
Y is an anion preferably one of the following: bromide, chloride, nitrate, sulfate and acetate, and
R is $(C_1-C_4)$ straight chain alkyl or hydroxy-substituted $(C_1-C_4)$ straight chain alkyl.

For the purpose of describing the above compounds, throughout the description and claims the term "ar-vinylphenylenylalkylenyl" is intended to encompass all vinylphenylenyl compounds irrespective of the position of the vinyl group on the ring structure, as well as those compounds in which one or two of the four hydrogen atoms attached to the phenylene ring carbons are replaced by one of the following: lower, such as $(C_1-C_4)$, alkyl, iodo, bromo, chloro, lower, such as $(C_1-C_4)$, alkoxy, amido, monohydrocarbylamide, dihydrocarbylamido, hydrocarbyloxy and carbonyloxy groups to the extent that such groups do not interfere with the general characteristics of the compounds, particularly the ability to form addition copolymers and the ability of such copolymers to crosslink.

Accordingly this invention also provides the halohydroxypropyl dialkyl-ar-vinylphenylenyl-alkylenyl quaternary ammonium compounds of the general formula:

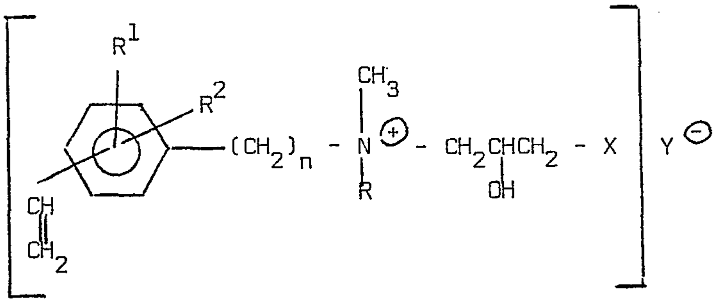

wherein X is halo,

n is an integer from 1 to 4,

Y is an anion,

R is $C_1$-$C_4$ straight chain alkyl or hydroxy substituted $C_1$ to $C_4$ straight chain alkyl, and

$R^1$ and $R^2$ independently comprise one of: lower alkyl, iodo, bromo, lower alkoxy, amido, monohydrocarbylamido, dihydrocarbylamido, hydrocarbyloxy, carbonyloxy and hydrogen.

As can be seen from those mentioned above, anions useful in this application need not have surface active properties in water, so that non-surfactant anions form a useful category of anions. However it is also possible to use surfactant anions.

In an embodiment of this invention which is particularly useful for the emulsion polymerization of these quaternary ammonium monomers, the counter-ion $Y^{\ominus}$ is an anion which is surface active in water.

In accordance with further aspects of this invention there are provided:

(i) A polymerisation process for making a polymer which comprises polymerising one or more compounds of the above formula optionally together with at least one other monoethylenically unsaturated monomer having a group of the formula $H_2C = C<$.

(ii) A polymerisable composition for use in process (i) which comprises one or more compounds of the above formula in a suitable medium optionally together with at least one other monoethylenically unsaturated monomer having a group of the formula $H_2C=C<$.

(iii) a method of making a monomer suitable for use in the composition of (ii) by reacting a hydrogen acid salt of an <u>ar</u>-vinylphenylenylalkylenyl dialkyl amine with an epihalohydrin of the formula $halo-CH_2-CH-CH_2-O$.

The invention will be hereinafter described for an embodiment of the invention in which the vinylphenylenylalkenyl group is vinylbenzyl (i.e. where n in the above formula is 1), and where R is methyl, X is chloro and $Y^{\ominus}$ is nitrate. This is for illustrative purposes only.

The monomers are conveniently prepared from the corresponding tertiary amine which is converted to a hydrogen acid salt. The acid salt can then be carefully reacted under the controlled conditions similar to those described in U.S. Patent 3,678,098 to produce the quaternary ammonium monomer. In a typical example, an aqueous solution of nitric acid is prepared and ar-vinylbenzyldimethylamine is added slowly; the neutralization reaction is continued until the pH of the solution reaches about 6.0 to 6.5 with the temperature increasing from about 25°C to about 37°C. Epichlorohydrin is then added, together with the balance of the tertiary amine. The pH of the solution is continually monitored and maintained slightly acidic to neutral, i.e. about 6.5 to 7.5 pH by the addition of 10% aqueous sodium carbonate, as required. When the exothermic reaction is essentially complete, additional nitric acid and $H_2O$ are added to provide an acidic solution of 25%

active ingredient composition(based on the sum of the added amine and the epichlorohydrin divided by the total weight of solution). The resulting product is a solution of chlorohydroxypropyl dimethyl-ar-vinylbenzylammonium nitrate. In brief, summary, therefore, the process for producing the monomer may be seen as the conversion of a tertiary amine to a hydrogen acid salt followed by reaction of the hydrogen acid salt under acidic conditions with an epihalohydrin, followed by further acidification and dilution to the level of concentration desired for ultimate use of the monomer solution. It should be noted that once the hydrogen acid salt of the tertiary amine is formed, the reaction with the epihalohydrin can be conducted in any of the methods described in the aforementioned U.S.Patent 3,678,098, particularly the examples and the section beginning at line 68 of column 1 and concluding at line 17 of column 2.

The epihalohydrin used for the purposes of this invention may/for example be the epiiodohydrin or the epibromohydrin. It is preferable however, to use the epichlorohydrin. It has been found that there is a relationship between the rate of reaction (of the epihalohydrin with the amine hydrogen acid salt) and the nature of the R substituents on the amino nitrogen. For that reason, it will generally be preferred that R is methyl. Nevertheless, adherence to the definition of R as stated above may provide acceptable reaction rates of the amino salts with any of the epihalohydrins.

The selection of the particular hydrogen acid salt is not critical; while either the hydroiodide or hydrobromide are useful, it will generally be preferable to use the acid salt of hydrochloric acid, or nitric acid. The hydrogen acid salts formed with sulfuric acid or acetic acid are useable but these acids are not preferred.

As will be seen from the Examples, the monomers of the present invention are suitably prepared and stored as aqueous solutions. This is not a critical limitation, however, and if desired, they may be concentrated and/or isolated from the reaction medium in which they are dissolved by removal of the water, for example by vaporization under vacuum.

In the Examples which follow, the equipment consists of a flask equipped with a stirrer, a thermometer, a pH electrode, a reflux condenser, and an additional funnel. Deionized water is used throughout the examples.

EXAMPLE 1

A flask was charged with 80 g of water and 21.5 g of aqueous nitric acid containing 7.59 milliequivalents ("meq") per gram (a total acid charge of 163.2 meq). Approximately 90% of the stoichiometric amount of ar-vinylbenzyl dimethylamine necessary to neutralize the acid was then slowly added. The temperature increased from 25°C to about 37°C. When the pH reached between 6.0 to 6.5, the amine feed was discontinued and 15.1g (163.2 meq) of epichlorohydrin was added in a single addition. The remainder of the tertiary amine, approximately 16 meq, was also added. Quaternization began and the pH increased to between

7.0 to 7.5. After approximately 2-5 minutes an exothermic reaction commenced and continued for about 25 minutes until the temperature reached a maximum of about 45°C. The reaction temperature was held at this temperature level and the pH continually monitored and held in the range of 6.5 to 7.5 by additions of sodium carbonate, (10% aqueous $Na_2CO_3$ as needed). After about 3 hours at 45°C the reaction was complete and the pH adjusted to 4-5 with nitric acid. The mixture was diluted with water (approximately 23 g) to provide 25% active ingredient (determined as the sum of amine addition and epichlorohydrin addition divided by the total weight of solution). The reaction solution was then filtered to provide a clear light yellow solution of chlorohydroxypropyl-N,N-dimethyl-*ar*-vinylbenzyl ammonium nitrate.

EXAMPLE 2

The procedure of Example 1 was repeated except that the tertiary amine was N-hydroxyethyl-N-methyl-*ar*-vinylbenzylamine and the aqueous nitric acid contained approximately 11.1 meq per gram. The quaternization reaction was not spontaneously exothermic. Additional heat had to be added to reach the temperature of 50°C. After four hours at 50°C, the conversion was about 69%. Additional epichlorohydrin was added and heating continued for two more hours to obtain approximately 85% conversion. When the reaction mixture was left over night, quaternization was essentially complete. At 30°C, the system was a hazy brown solution containing 25% by weight of the active quaternary monomer, chlorohydroxypropyl N-hydroxyethyl N-methyl-*ar*-vinylbenzyl ammonium nitrate. At temperatures in the range of 20-25°C the system separated into two phases.

The substituents on the amino nitrogen bear

markedly on the reaction rate and the production of these novel quaternary ammonium monomers. Thus, for example, where the dimethyl compound of Example 1 is useful, and proceeds spontaneously, the diethyl, diisopropyl, and dihydroxyethyl amines are not suitable for producing amines of the type desired. As long as one of the substituents on the tertiary amine nitrogen is methyl, and a second is not excessively long, i.e. not beyond about four carbon atoms, effective reaction rates are possible with added heat.

EXAMPLES 3 TO 6

Example 2 was repeated with the amines listed in Table 1 to produce the corresponding quaternary monomers. As in the case with Example 2, it was generally found that some additional heat was required in order to initiate and maintain the reaction and this need for heat increased with the length of the carbon chain of the tertiary amine substituents.

TABLE I

| Example | ar-Vinylbenzyl Amine | Quaternary Monomer Produced |
|---|---|---|
| 3 | N-ethyl,N-methyl | chlorohydroxypropyl N-ethyl N-methyl-ar-vinylbenzyl ammonium nitrate |
| 4 | N-i-propyl,N-methyl | chlorohydroxypropyl N-i-propyl N-methyl-ar-vinylbenzyl ammonium nitrate |
| 5 | N-butyl,N-methyl | chlorohydroxypropyl N-butyl N-methyl-ar-vinylbenzyl ammonium nitrate |
| 6 | N-hydroxypropyl, N-methyl | chlorohydroxypropyl N-hydroxy N-propyl methyl-ar-vinylbenzyl ammonium nitrate |

In each case, it was generally found to be advantageous to utilize an excess of the epichlorohydrin.

EXAMPLES 7 to 12

Increasing the length of the alkene chain between the phenylene group and the amino nitrogen in the tertiary amine produces an effect somewhat similar to that observed when using longer chain alkyl groups in the amine compound, i.e., it is somewhat more difficult to initiate the reaction and the reaction takes somewhat longer. This effect is not as pronounced as is the case where both of the remaining groups on the amino nitrogen are other than methyl. Proceeding as in Example 1 but using ar-vinyl-phenylenylpropenyl dimethyl amine, the tertiary amine was neutralized with aqueous nitric acid (116.3 meq, 7.5 meq/g, 15.3 g), then quaternized with epichlorohydrin (116.3 meq, 10.7 g). The quaternary monomer was produced as a yellow solution (25% active ingredient). When Examples 2-6 were repeated with the ar-vinylphenylenylpropenyl analogs, the reactions required substantial heat for initiation and substantial heat to maintain the reaction, the analog of Example 6 was particularly difficult to react and the reaction was much slower.

EXAMPLES 13 to 24

Repetition of Examples 1-12 with the substitution of the epibromohydrin for epichlorohydrin provided quaternization essentially as in Examples 1-12. Changes in the reactivity or the reaction rate were not of sufficient consequence to justify use of one halohydrin over the other and the choice is determined primarily by properties desired in the product and by cost of reactants.

EXAMPLES 25 to 48

The foregoing Examples are repeated except that the nitric acid was replaced by hydrochloric acid. There was little change in the rate of reaction or in the extent of the reaction, any differences being those normally encountered in reacting tertiary amines with acids to form amine salts. The particular choice of acid is dictated primarily by the system in which the resulting monomer will be used, and the effect the acid ions will have on the system.

The quaternary ammonium monomers of the present invention are polymerizable, and for this purpose, their aqueous solutions may be used directly. Any known polymerization initiator of the free radical type which is effective in aqueous systems can be used. Examples are t-butyl hydroperoxide, ammonium persulfate and alkali metal persulfates, such as those of sodium or potassium. They are used at the customary proportion of 0.1 to 2% by weight based on monomer weight. They may be used with sodium hydrosulfite or other reducing agents in redox systems. Alternatively, the polymerization may be effected by actinic radiation.

Emulsion polymerization procedures are particularly effective for polymerization of the quaternary ammonium monomers. As emulsifiers there may be used t-octyl or t-nonyl phenoxypolyethoxyethanols having from about 10 to 50 or more oxyethylene groups, octadecylamine sulfate, cyclohexyldiethyl(dodecyl)amine sulfate, octadecyltrimethyl-ammonium bromide, polyethoxyamines or mixtures of two or more such emulsifiers.

Any ethylenically unsaturated monomer having a group

$$H_2C=C<$$

may be polymerized with the quaternary monomers of the present invention, under conditions such that the polymerization medium is maintained at an acid condition, preferably at a pH of not over 6. Thus by this method, it is possible to produce homopolymers and/or copolymers of the present quaternary monomers with the quaternary monomers of the aforementioned U.S. Patent 3,678,098. In addition, it is possible to copolymerize the present novel monomers with any of the monoethylenically unsaturated monomers described in U.S. Patent 3,702,799 beginning in Column 4 at line 51 and continuing through line 22 of Column 5.

In the Examples which follow, ethyl acrylate is employed purely by way of an example to illustrate copolymerization of the quaternary monomers. Any of the ethylenically unsaturated monomers having the appropriate group may, however, be used for copolymerization.

EXAMPLE 49

The reaction systems used for this example are decribed in Table II:

TABLE II

Reaction Mixture A:

water (521 g); emulsifier* (27.5 g); $FeSO_4$ 7 $H_2O$ (0.1% aqueous, 36 g); Versene Solution (1% aqueous, 9.9 g); acetic acid (0.10 g); ethyl acrylate (180 g).

| | |
|---|---|
| Solution 1: | sodium sulfoxylate formaldehyde (0.36 g in 27 g water) |
| Solution 2: | sodium hydrosulfite (0.10 g in 5 g water) |
| Solution 3: | emulsifier* (27.5 g in 34 g water) |
| Solution 4: | sodium sulfoxylate formaldehyde (1.44 g in 110 g water) |

TABLE II (Cont'd)

Reaction Mixture B:

water (225 g); emulsifier* (27.5 g); quaternary monomer** (25% active ingredients, 108 g); ethyl acrylate (693 g); diisopropylbenzene hydroperoxide (55% active ingredient, 5.2 g).

---

* t-octyl-phenoxypolyethoxyethanol (40 oxyethylene groups)

** chlorohydroxypropyl N,N-dimethyl-ar-vinylbenzyl ammonium nitrate, aqueous solution from Example 1

Reaction Mixture A was prepared by charging the ingredients separately into a flask equipped with stirrer, a thermometer with automatic temperature control, addition funnels, an inlet for nitrogen and a reflux condenser. The charge was stirred and sparged with nitrogen for 60 minutes at which point the sparge was removed from the liquid but allowed to sweep through the flask. The polymerization was then initiated by adding diisopropylbenzene hydroperoxide (55% active ingredient, 1.3 g) and Solution 1 and Solution 2. The reaction mixture temperature was in the range of 20-25°C. In less than about 5 minutes, an exothermic reaction began which peaked at a temperature in the range of 55-65°C in a period of about 5 or 10 minutes. Approximately 5 minutes after reaching peak temperature, Solution 3 was added with stirring over a period of about 5 minutes. Solution 4 and Reaction Mixture B, as an emulsion, were then added to the flask evenly over three hours. The reaction vessel was cooled to maintain the contents at a temperature in the range of 55-60°C. At the end of the feed, the batch was held at this temperature for about 15 minutes before adding 1.6 g of diisopropyl benzenehydroperoxide and sodium

sulfoxylate formaldehyde in water as chase catalysts. After an additional 30 minutes at the same temperature, the reaction was complete. The reaction mixture was then cooled and filtered. The product was a milky white suspension containing approximately 45.6% solids, representing a 97.8% conversion, with a wet gum measure of 0.03%, a pH of 3.0, and a viscosity of 60 cps (0.06 $Ns/m^2$) (number 3 spindle at 30 rpm).

EXAMPLE 50

Example 49 was repeated except that the quaternary monomer used was the aqueous solution of chlorohydroxy propyl N-hydroxyethyl N-methyl-ar-vinylbenzyl ammonium nitrate solution produced in accordance with Example 2. Once again a milky white solution was obtained which contains 45.8% solids and represents a 98.2% conversion, with a wet gum of 0.02%, a pH of 2.9 and a viscosity of 40 cps (0.04 $Ns/m^2$) (number 3 spindle at 30 rpm).

EXAMPLES 51 to 64

Table III lists preferred comonomers for copolymerization with the novel quaternary monomers of the present invention. When the ethyl acrylate in each of Examples 49 and 50 was replaced by one of these monomers, the reaction proceeded essentially as described in the aforementioned Examples 49 and 50 with the production of the corresponding polymer.

TABLE III

Preferred Monomer System

Methyl Acrylate
Butyl Acrylate
Methyl Methacrylate/Styrene; 1:1 (wt. basis)

Methacrylic Acid
Acrylic Acid
Butyl Acrylate/Styrene, 1:1 (wt. basis)
Acrylonitrile

It should be recognised that the quaternary monomers of the present invention can also be homopolymerized under essentially the same conditions used for copolymerization. The use of such homopolymers are, however, considerably more limited since homopolymerization does not allow for the great variation in polymer characteristics obtained with copolymerization. The aforementioned U.S. Patent 3,702,799 at Column 7, lines 10-37 illustrate the uses of other quaternary ammonium homopolymers to improve wet strength of paper and as flocculants. U.S. Patent 3,702,799 also describes the use of various polymers in fibers and their antistatic dying and moisture retaining properties (column 5, lines 23-41) and the present copolymers can be similarly used.

Major uses of the copolymers of the present invention are in the production of paper as wet strength agents and as electroconductive aids in making various electroconductive papers for electrostatic image reproduction systems. Some of these characteristics are illustrated in the following examples:

EXAMPLES 65 AND 66

The polymer emulsions described in Examples 49 and 50 were used to bond nonwoven fabrics. Rayon card webs weighing 17 $g/m^2$ and containing 0.5% prebonding material of polyvinyl alcohol were padded with aqueous baths containing respectively 15% of the

solids of said emulsions and 0.5% $NaHCO_3$ as activators. Upon drying at room temperature the webs picked up 22% of the respective polymers.

The curing of these polymers is readily shown by measuring the wet tensile strength of the treated webs after various ageing and heating treatments under controlled relative humidity. The results are set forth in Table IV which follows:

TABLE IV

Water Wet Tensile Strength

(g/cm of width in cross section)

| Polymer Emulsion | Aged 2 min. at 115°C. | Aged 1 day at 21°C/65% RH | Aged 7 days at 21°C/65% RH |
|---|---|---|---|
| Example 49 | 53 | 28 | 40 |
| | 90 | 70 | 45 |
| Example 50 | 45 | 31 | 36 |
| Polymer A | 92 | 65 | 89 |
| Polymer B | 103 | 14 | 21 |

Polymer A = 97 Ethyl Acrylate/3 Methacryloxyethyl Dimethyl Chlorohydroxypropyl Ammonium Nitrate (cf. 3,678,098)

Polymer B = 96 Ethyl Acrylate/about 4 (N-methylolacrylamide: Acrylamide, 1:1) (cf. U.S. 3,157,562) (correctional heat-curing control)

RH = relative humidity

EXAMPLE 67

Emulsion produced in Example 49 was substituted for Polymer A (see definition in Table IV, above), in the production of a dyeable finish for polypropylene tufting substrate (see U.S. Patent 4,014,645). The same emulsion is substituted for Polymer A as a pigment binder for glass fabric (see examples in U.S. Patent 4,009,314). In both cases, the polymer emulsion performs

in a manner equivalent to the examples using Polymer A in those two patents.

EXAMPLES 68 TO 71

A flask equipped with stirrer, a thermometer with automatic temperature control, addition funnels, inlet for nitrogen and a reflux condenser is charged with water (300 g) and a 0.10% aqueous solution of $FeSO_4 \cdot 7\ H_2O$ (4 g) and the contents are heated to 75°C in a nitrogen atmosphere. Two solutions are prepared. The first is defined in Table V as follows:

TABLE V
Reaction Solution 1

Example 68: 25% aqueous solution of quaternary monomer ("quat") from Example 1 (440 g); acrylamide (90 g); water (150 g); $HNO_3$ to pH 3.

Example 69: Same as Example 68 except 280 g of "quat", 130 g of acrylamide and 270 g of water.

Example 70 (COMPARATIVE): Same as Example 68 except "quat" is chlorohydroxylpropyl N,N-dimethyl methacrylamidopropyl ammonium nitrate (320 g), 120 g of acrylamide and 240 g of water.

Example 71 (COMPARATIVE): Same as Example 68 except "quat" is methacryloxyethyl dimethyl chlorohydroxypropyl ammonium nitrate (380 g), 105 g of acrylamide and 240 g of water.

The second solution consisted of 100 g of water and 0.72 g of 70% t-butyl hydroperoxide. Isoascorbic acid (0.50 g) was added to the initial reaction vessel followed by feeding solutions 1 and 2 simultaneously and evenly over two hours while maintaining the temperature at about 75°C. Approximately half-way through the feed an additional 0.50 g of isoascorbic acid was introduced to the reaction flask. When the feeds were completed,

the temperature was held at 75°C for thirty minutes and 0.10 g of isoascorbic acid and 0.14 g of t-butyl hydroperoxide were added then heating continued for 30 additional minutes. At the end of that time, the reaction mixture was cooled. The physical characteristics of the solutions are described in Table VI.

TABLE VI

Physical Properties of Polymer Solutions

| Example | Color | Clarity | Solids, % | Viscosity cps* | Viscosity $Ns/m^2$ | pH |
|---|---|---|---|---|---|---|
| 68 | pale yellow | hazy | 22.2 | 280 | 0.28 | 4.6 |
| 69 | pale yellow | hazy | 20.5 | 40 | 0.04 | 3.0 |
| 70 | dark amber | sl. hazy | 22.4 | 80 | 0.08 | 4.1 |
| 71 | lt. amber | sl. hazy | 22.3 | 160 | 0.16 | 2.8 |

*No. 3 spindle at 30 rpm

Each of the above described resins were evaluated for wet strength properties in laboratory-prepared hand sheets (see U.S. 3,702,799, column 10, beginning line 15 through Table for details of technique). The results of these tests are found in the following Table VII:

TABLE VII

Wet Strength Papers With Experimental Resins

Resin: Activated at 10% solids with 105% of $Na_2CO_3$ (calcd., of base required to generate epoxy), aged for 1 hr. diluted to 1% solids and added to pulp.

Furnish: Unbleached kraft pulp, lightly beaten to a 13° Schopper Riegler Freeness, pH 7.4.

Paper: Handsheets made at a basic weight of 40 lbs/3 M.S.F.

| Treatment (% resin on pulp | Wet Tensile Strength cured[1] kg/m | (lb/in) | 28 days aging kg/m | (lb/in) | Efficiency (%) Wt. Kymene/Wt. Exp.[2] |
|---|---|---|---|---|---|
| 0.25 Example 68 | 55.4 | (3.1) | 55.4 | (3.1) | 100 |
| 0.35 " | 60.7 | (3.4) | 64.3 | (3.6) | 91 |
| 0.50 " | 66.1 | (3.7) | 73.2 | (4.1) | 85 |
| 0.25 Example 69 | 48.2 | (2.7) | 50.0 | (2.8) | 84 |
| 0.35 " | 53.6 | (3.0) | 58.9 | (3.3) | 79 |
| 0.50 " | 62.5 | (3.5) | 64.3 | (3.6) | 64 |
| 0.25 Example 70[3] | 46.4 | (2.6) | 53.6 | (3.0) | 94 |
| 0.35 " | 51.8 | (2.9) | 58.9 | (3.3) | 79 |
| 0.50 " | 60.7 | (3.4) | 66.1 | (3.7) | 67 |
| 0.30 Example 71[3] | 28.6 | (1.6) | - | - | 27 |
| 0.50 " | 33.9 | (1.9) | - | - | 22 |
| 0.15 Kymene 557H[4] | 39.3 | (2.2) | 39.3 | (2.2) | -- |
| 0.25 " | 57.1 | (3.2) | 55.4 | (3.1) | -- |
| 0.35 " | 69.6 | (3.9) | 67.9 | (3.8) | -- |
| 0.50 " | 75.0 | (4.2) | 76.8 | (4.3) | -- |

[1] In $210^{o}F$ oven for 5 min.

[2] at equal wet strength

[3] Prior art polymer

[4] Does not require activation

As can be seen from Examples 68 and 69 in Table VII, the polymers of the present invention compare quite favorably with the two prior art materials of Examples 70 and 71 and with the standard commercial material Kymene 557H.

Tests show that the polymers of the present invention, require activation by $NaHCO_3$ or its equivalent if the wet tensile strength of nonwoven fabrics treated with such polymers are to be fully developed. This characteristic has also been found with the prior art polymers of U.S. Patent 3,702,799. Unlike these prior art polymers, however, $NaHCO_3$ activation is unnecessary to develop flock adhesive performance for the present polymers. Ammonia (0.06% $NH_3$ based on solids) (typically formulated from 28% aqueous $NH_3$) is suitable for flock adhesive activation although not suitable with the prior art polymers.

CLAIMS

1. The halohydroxypropyl dialkyl-ar-vinylphenylenyl-alkylenyl quaternary ammonium compounds of the general formula:

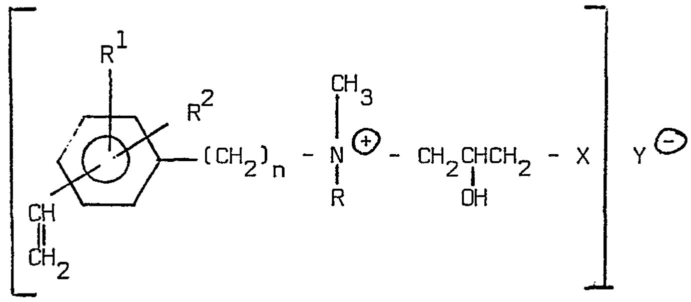

wherein X is halo,

n is an integer from 1 to 4,

$Y^{\ominus}$ is an anion,

R is $C_1$ to $C_4$ straight ohain alkyl or hydroxy substituted $C_1$ to $C_4$ straight chain alkyl and

$R^1$ and $R^2$ independently comprise one of : lower alkyl, iodo, bromo, chloro, lower alkoxy, amido, monohydrocarbylamido, dihydrocarbylamido, hydrocarbyloxy, carbonyloxy and hydrogen.

2. The compounds as claimed in claim 1 of the general formula:

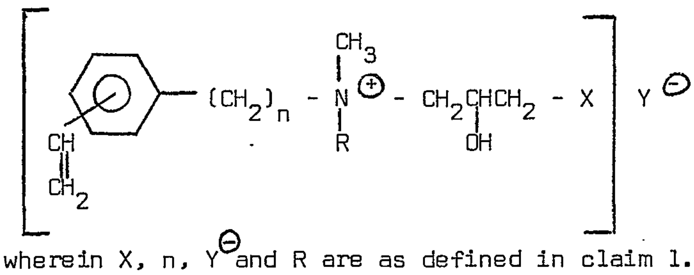

wherein X, n, $Y^{\ominus}$ and R are as defined in claim 1.

3. The compounds as claimed in claim 2 which are halohydroxypropyl dimethyl-ar-vinylbenzyl ammonium salts or halohydroxypropyl ethyl methyl-ar-vinylbenzyl ammonium salts or halohydroxypropyl i-propyl methyl-ar-vinylbenzyl ammonium salts or halohydroxypropyl butyl methyl-ar-vinylbenzyl ammonium salts or halohydroxypropyl hydroxyethyl methyl-ar-vinylbenzyl ammonium salts.

4. The compounds as claimed in claim 2 or 3 wherein X is chloro and $Y^{\ominus}$ is nitrate.

5. The compounds as claimed in claim 2 or 3 wherein X is chloro and $Y^{\ominus}$ is chloride.

6. Polymer containing units of one or more compounds as claimed in any preceeding claim.

7. Polymer containing units of one or more compounds as claimed in any of claims 1 to 5 and any amount of units of at least one other monoethylenically unsaturated monomer having a group of the formula:

$$H_2C = C<$$

8. Polymer containing at most 50% by weight of units of one or more compounds as claimed in any of claims 1 to 5 and at least 50% by weight of units of at least one other monoethylenically unsaturated monomer having a group of the formula: $H_2C = C<$

9. Polymer as claimed in claim 8 containing units of one or more compounds as claimed in claim 4.

10. A polymerisation process for making a polymer which comprises polymerising one or more compounds as claimed in any of claims 1 to 5 optionally together with at least one other monoethylenically unsaturated monomer having a group of the formula:

$$H_2C = C<$$

11. A polymerisable composition suitable for use in a process as claimed in claim 10 comprising one or more compounds as claimed in any of claims 1 to 5 in a suitable medium optionally together with at least one other monoethylenically unsaturated monomer having a group of the formula: $H_2C = C<$

12. A method of making a monomer suitable for use in a composition as claimed in claim 11 which comprises reacting a hydrogen acid salt of an ar-vinylphenylenylalkylenyl dialkyl amine with an epihalohydrin of the formula $X-CH_2-\underline{CH-CH_2-O}$, wherein X is as defined in claim 1, to form one or more compounds as claimed in any of claims 1 to 5.

CLAIMS

1. A polymerisation process for making a polymer which comprises polymerising one or more halohydroxypropyl dialkyl-ar-vinylphenylenylalkylenyl quaternary ammonium compounds of the general formula:

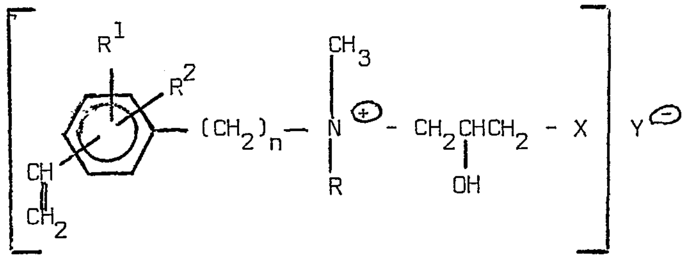

wherein X is halo,

n is an integer from 1 to 4,

$Y^{\ominus}$ is an anion,

R is $C_1$ to $C_4$ straight chain alkyl or hydroxy substituted $C_1$ to $C_4$ straight chain alkyl, and

$R^1$ and $R^2$ independently comprise one of: lower alkyl, iodo, bromo, chloro, lower alkoxy, amido, monohydrocarbylamido, dihydrocarbylamido, hydrocarbyloxy, carbonyloxy and hydrogen

optionally together with at least one other monoethylenically unsaturated monomer having a group of the formula $H_2C = C<$.

2. A process as claimed in claim 1 wherein the compounds are of the general formula:

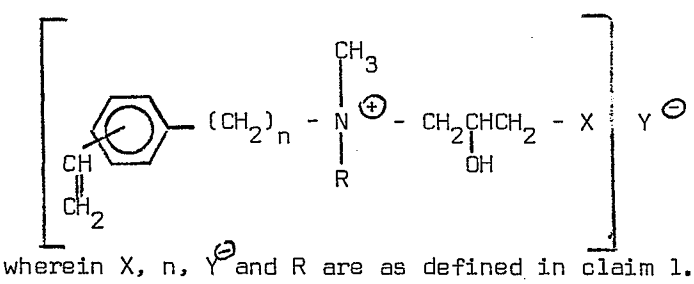

wherein X, n, $Y^{\ominus}$ and R are as defined in claim 1.

3. A process as claimed in claim 2 wherein the compounds are one or more of halohydroxypropyl dimethyl-ar-vinylbenzyl ammonium salts or halohydroxypropyl ethyl methyl-ar-vinylbenzyl ammonium salts or halohydroxypropyl i-propyl methyl-ar-vinylbenzyl ammonium salts or halohydroxypropyl butyl methyl-ar-vinylbenzyl ammonium salts or halohydroxypropyl hydroxyethyl methyl-ar-vinylbenzyl ammonium salts.

4. A process as claimed in claim 2 or 3 wherein X is chloro and $Y^{\ominus}$ is nitrate.

5. A process as claimed in claim 2 or 3 wherein X is chloro and $Y^{\ominus}$ is chloride.

6. A polymerisable composition suitable for use in a process as defined in any preceding claim which comprises one or more compounds as defined in any of claims 1 to 5 optionally together with at least one other monoethylenically unsaturated monomer having a group of the formula : $H_2C = C<$.

7. A method of making a monomer suitable for use in a composition as claimed in claim 6 which comprises reacting a hydrogen acid salt of an <u>ar</u>-vinylphenylenylalkylenyl dialkyl amine with an epihalohydrin of the formula $X-CH_2-CH-CH_2-O$, wherein X is as defined in claim 1, to form one or more compounds as defined in any of claims 1 to 5.

0072159

European Patent Office

# EUROPEAN SEARCH REPORT

Application number

EP 82 30 4031

## DOCUMENTS CONSIDERED TO BE RELEVANT

| Category | Citation of document with indication where appropriate, of relevant passages | Relevant to claim | CLASSIFICATION OF THE APPLICATION (Int. Cl. 3) |
|---|---|---|---|
| D,A | US-A-3 678 098 (S.N. LEWIS et al.)<br>--- | | C 08 F 12/28<br>C 07 C 91/26 |
| A | GB-A-1 143 761 (GENERAL ANILINE & FILM CORP.)<br>----- | | |
| | | | TECHNICAL FIELDS SEARCHED (Int. Cl. 3) |
| | | | C 08 F<br>C 07 C |

The present search report has been drawn up for all claims

| Place of search | Date of completion of the search | Examiner |
|---|---|---|
| THE HAGUE | 08-10-1982 | CAUWENBERG C.L.M. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document